# EUROPÄISCHE PATENTSCHRIFT

(11) **EP 1 845 362 B1**
(45) Veröffentlichungstag und Bekanntmachung des Hinweises auf die Patenterteilung: **15.12.2021**
(21) Anmeldenummer: 07006853.1
(22) Anmeldetag: 02.04.2007
(51) Int. Cl.: G01N 21/33, G01N 21/03, G01N 31/12

(54) **Spektroskopievorrichtung**
Spectroscopy apparatus
Dispositif spectroscopique

(30) Priorität: 15.04.2006 DE 102006017702
(43) Veröffentlichungstag der Anmeldung: 17.10.2007
(73) Patentinhaber: Krieg, Gunther, Prof.Dr.Ing., 76227 Karlsruhe (DE)
(72) Erfinder: Bohe, Thomas, 76532 Baden-Baden (DE); Fey, Dirk, 67630 Neewiller (DE); Bohleber, Jürgen, 77815 Bühl (DE)
(74) Vertreter: Ullrich & Naumann PartG mbB

(56) Entgegenhaltungen:
- WO-A1-92/15860
- DE-A1- 1 598 792
- DE-A1- 10 205 525
- DE-A1- 19 652 513
- GB-A- 1 093 565
- US-A- 5 350 565
- VRIES DE H S M ET AL: "A REAL-TIME, NONINTRUSIVE TRACE GAS DETECTOR BASED ON LASER PHOTOTHERMAL DEFLECTION" REVIEW OF SCIENTIFIC INSTRUMENTS, AIP, MELVILLE, NY, US, Bd. 66, Nr. 9, 1. September 1995 (1995-09-01), Seiten 4655-4664, XP000528733 ISSN: 0034-6748

## Beschreibung

Die Erfindung betrifft eine Spektroskopievorrichtung, insbesondere zur Analyse von chemisch verunreinigtem Kohlendioxid, mit einer rohrförmigen Messzelle, sowie ein gattungsgemäßes Spektroskopieverfahren.

Die Absorptionsspektroskopie stellt ein wichtiges Werkzeug der Spurenanalyse dar, also der Bestimmung kleiner bis kleinster Mengen eines Stoffes neben großer Mengen an Hauptbestandteilen, welcher vor allem in der chemischen Industrie, der Metallurgie, der Medizin, der Biologie, der Geologie und der Kriminalistik eine große Bedeutung zukommt. Ein derartiges Verfahren zeichnet sich durch die Analyse eines Absorptionsspektrums aus, welches aus der Bestrahlung eines verunreinigten gasförmigen Stoffes durch ein Emissionsspektrum bekannter Leistungsdichte gewonnen wird und anhand dessen Rückschlüsse auf die mengengenaue Zusammensetzung des untersuchten Stoffgemisches möglich sind. So kann beispielsweise die Verunreinigung von chemisch produziertem Kohlendioxid überwacht werden, welches als Nebenprodukt insbesondere im Zuge des Haber-Bosch-Verfahrens zur Düngemittelherstellung, aus Raffinerie-Abgasen oder aus Verbrennungsmaschinen (letzteres insbesondere in Entwicklungsländern) beispielsweise zur Herstellung kohlensäurehaltiger Getränke verwendet wird. Benzol hat im Bereich zwischen 230 nm und 270 nm ein charakteristisches Linienspektrum mit fünf Linien, die eine Feinstruktur aufweisen. Benzol darf, da es krebserregend ist, einen Grenzwert von 20 ppb, Methan (nicht krebserregend) einen Höchstwert von 1 ppm nicht überschreiten. Zur sicheren Überprüfung muss Benzol mit einer Genauigkeit von 3 ppb feststellbar sein. Benzol in diesem Bereich führt auch bei einer recht großen Durchstrahlungslänge in der Größenordnung von ca. 2 m durch Kohlendioxid zu einer logarithmischen Schwächung der Intensität in der Größenordnung 10⁻⁵.

Zum Nachweis dieser geringen Gasmengen mit der geforderten Messgenauigkeit sind zwangsläufig hochempfindliche Messgeräte erforderlich, was mit hohem Kostenaufwand und komplexem und damit immobilem Aufbau der Messvorrichtung verbunden ist. Gleichzeitig sind hohe Anforderungen an die Optimierung des Messsignals und die Eliminierung messschädigender Einflüsse zu richten, welche insbesondere von der jeweiligen Messumgebung abhängen, so dass eine derart kleine Substanzmenge trotz des geringen Absorptionskoeffizienten mit einer Signalstärke oberhalb des Hintergrundrauschens nachweisbar ist. Ausgehend von der natürlichen Linienbreite, wie sie unabdingbar durch die mittlere Anregungszeit eines Molekülgrundzustands aus der Heisenbergschen Unschärferelation resultiert, tragen insbesondere Doppler- und Druckverbreitungsmechanismen zur Verminderung des Absorptionskoeffizienten bei, welche wiederum durch Parameter der Messumgebung beeinflussbar sind. Weiterhin kann durch eine genügend hoch gewählte Strahlungsdichte, einem hinreichend langen Durchstrahlungsweg und dem Einsammeln eines möglichst großen Bestandteils des eingestrahlten Wellenspektrums eine Signalstärke oberhalb der Rauschgrenze erreicht werden.

Die DE 15 98 792 A1 zeigt einen Messkopf zur Durchführung von Thermoanalysen, bei welchem ein mit einer Heizwicklung versehener Ofenkörper Kanäle zur Aufnahme von Proberöhrchen sowie zur Beleuchtung und Beobachtung der in den Proberöhrchen befindlichen Proben aufweist.

Aus der DE 196 13 985 C1 sind ein Verfahren und eine Vorrichtung zur Bestimmung von Eigenschaften von Zellstoff und/oder zur Messung an Fasersuspensionen bekannt geworden.

Aus der DE 102 05 525 A1 sind ein Verfahren und eine Vorrichtung zur Reinheitskontrolle von Kohlendioxid für Anwendungen in der Getränkeindustrie bekannt geworden.

Aus der WO 92/15860 A1 ist eine Spektroskopievorrichtung mit einer rohrförmigen Messzelle bekannt geworden, wobei beidseitig jeweils zwei parallel zur Erstreckungsrichtung der Messzelle angeordnete Rohre vorgesehen sind. Jeweils zwei senkrecht zur Erstreckungsrichtung benachbarte Rohre sind über eine Umlenkspiegeleinheit optisch verbunden.

Weitere bekannte Messzellen sind aus der GB 1 093 565 A und aus der Nicht-Patentliteratur "A real-time, nonintrusive Trace gas Detector based on Laser photodermal Deflection" von Vries de H S M et al., Melville, NY, US, Bd. 66, Nr. 9, 1. September 1995 (1995-09-01), Seiten 4655-4664 bekannt geworden.

Die US 5 350 565 A zeigt eine Spektroskopievorrichtung mit vier in Form eines Kreisels angeordneten, rohrförmigen Messzellen. Die Messzellen sind dabei über einen oberen und unteren Träger 14, 16 in Form einer kreisförmigen Scheibe miteinander verbunden. Die kreisförmigen Scheiben sind dabei starr und verbinden die vier Messzellen untereinander. Allerdings sind, bedingt durch die Anordnung der Messzellen zwischen den Scheiben, die Rohre - also die anderen drei Messzellen - nicht beidseitig der vierten Messzellen angeordnet, sondern liegen allesamt auf einer Seite der Messzelle, nämlich im Wesentlichen auf der Seite in Richtung der Drehachse der beiden Scheiben.

Der Erfindung liegt die Aufgabe zugrunde, eine Vorrichtung und ein Verfahren der eingangs genannten Art derart weiterzubilden, dass sie neben den vorher genannten komplexen Anforderungen eine hohe Reproduzierbarkeit der Messergebnisse aufweist, sowie einem geringen Kostenaufwand und einer einfachen Anwendbarkeit Rechnung trägt.

Erfindungsgemäß wird diese Aufgabe mit einer Vorrichtung mit den Merkmalen des Anspruchs 1 gelöst.

Die Messzelle weist ein stabiles Rohr mit massiver Wandung auf. Das Rohr weißt geschlossene Stirnseiten auf. Auch die Wandung ist bis auf Gasein- und Gasauslass vollständig geschlossen. Die vollständige optische Anordnung ist in dem geschlossenen Rohr angeordnet; Lichteinstrahlung, Reflektionsoptiken und Empfänger. Die Einstrahlung des Lichts in das Rohr und Auskopplung aus dem Rohr kann über Lichtleiter erfolgen.

Es erfolgt also auf einfache und konstruktive Weise eine Stabilisierung der Messzelle mit zugleich geringer räumlicher Ausdehnung der gesamten stabilisierten Messvorrichtung. Grundgedanke der vorliegenden Erfindung ist somit eine Dämpfung der durch Umwelteinflüsse induzierten Schwingungen und ein starkes Abklingverhalten derselben aufgrund vergrößerter Trägheit des Resonanzkörpers. Damit wird auch die Anregungsenergie von Molekularbewegungen des zu untersuchenden Gases reduziert, mit einer Verminderung der Druckverbreiterung und einer Erhöhung des Absorptionskoeffizienten, und damit einer resultierenden Rauschunterdrückung des Messspektrums und Erhöhung der Messgenauigkeit. Eine derartige Reduzierung von Störeinflüssen auf den Messvorgang ist insbesondere bei Messungen nahe der Rauschgrenze von wesentlicher Bedeutung, beispielsweise bei der Bestimmung des Benzolgehalts in verunreinigtem Kohlendioxid.

Eine besonders hohe Stabilisierung der Messzelle wird dadurch bewirkt, dass beidseitig jeweils wenigstens ein parallel zur Erstreckungsrichtung der Messzelle angeordnetes Rohr angeordnet ist. Zum selben Zweck ist weiterhin vorgesehen, dass die beidseitig parallel zur Messzelle angeordneten Rohre untereinander eine starre Verbindung aufweisen. Die starre Verbindung ist mittels jeweils endseitig an der Messzelle und an den Rohren angeordneten starren Verbindungsgliedern gebildet. Insbesondere kann auch vorgesehen sein, dass die Messzelle in Umfangsrichtung wenigstens eine weitere starre Verbindung mit jeweils einem parallel zur Erstreckungsrichtung der Messzelle angeordneten Rohr aufweist.

In bevorzugter Ausführung sind die parallel zur Messzelle angeordneten Rohre aus einem Material mit einem kleineren oder gleichen Wärmeausdehnungskoeffizienten wie Glas gebildet, womit gewährleistet ist, dass die starre Verbindung und somit die Stabilisierung der Messzelle auch bei schwankender Umgebungstemperatur und insbesondere bei variierender Temperatur des zu analysierenden Gasgemischs aufrechterhalten bleibt. Dadurch wird eine einfache Handhabung der Spektroskopievorrichtung bei Messungen mit unterschiedlicher Probentemperatur ermöglicht, welche insbesondere zur Verminderung der Druckverbreiterung und zur Rauschunterdrückung auf einen geeignet niedrigen Wert einstellbar ist. Beispielsweise kann chemisch verunreinigtes Kohlendioxid zur Durchführung eines erfindungsgemäßen Spektroskopieverfahrens in die Messzelle eingespeist werden und dessen Temperatur variiert werden. Dabei können insbesondere bei der Benzolspektroskopie temperaturabhängige Messungen vorteilhaft sein, da Benzol Moleküle untereinander nur van der Waals-Komplexe ausbilden, die selbst weit unterhalb der Raumtemperatur extrem instabil sind, so dass Temperaturänderungen das Messspektrum in weitem Umfang nicht beeinflussen, jedoch zu einer Erhöhung der Messgenauigkeit führen können. Zur Temperaturüberwachung ist weiterhin vorgesehen, dass die Messzelle thermostatisiert ist.

In höchst bevorzugter Ausführung sind die parallel zur Messzelle angeordneten Rohre aus dem gleichen Material wie die Messzelle, insbesondere aus Glas, gebildet. Dies führt erfindungsgemäß zu besonders einfacher und kostengünstiger Herstellung einzelner stabilisierter Spektroskopievorrichtungen, da auf dem Markt frei erhältliche Messzellen als Rohre zur Stabilisierung der eigentlichen Messzelle Verwendung finden können. In einer Weiterbildung können auch derart zur Stabilisierung vorgesehene Rohre als Messzellen verwendet werden, beispielsweise zur Spektroskopie eines Vergleichsgases. In weiterhin bevorzugter Ausführung weisen die parallel zur Messzelle angeordneten Rohre dieselbe Länge und/oder denselben Durchmesser wie die Messzelle auf. Weiterhin ist vorgesehen, dass die Messzelle eine Länge zwischen 50 und 150 cm, insbesondere im Bereich von 100 cm, und einen Durchmesser zwischen 1 und 5 cm, insbesondere im Bereich von 3 cm, aufweist. Hierdurch ist ein optimierter Kompromiss aus zur Messgenauigkeit benötigter Durchstrahlungslänge und einem kompakten Messaufbau gebildet, insbesondere bei der Bestimmung eines Benzolgehalts in der Größenordnung von 3 ppb.

Die starre Verbindung ist gemäß einer anderen bevorzugten Weiterbildung mittels jeweils eines oder mehrerer auf der Oberfläche der Rohre und der Oberfläche der Messzelle angeordneten/r starren/r Verbindungsglied(er) gebildet. Dies erlaubt großen Freiraum bei der Gestaltung der Verbindung, insbesondere ist die Anordnung nahezu beliebig vieler Verbindungsglieder möglich. Hierbei ist aus oben genannten Gründen ebenfalls vorgesehen, dass das starre Verbindungsglied jeweils aus einem Material mit einem kleineren oder gleichen Wärmeausdehnungskoeffizienten wie Glas gebildet ist. Bei dem endseitig an der Messzelle angeordneten starren Verbindungsglied können Einrichtungen zur Führung eines Messstrahls durch die Messzelle vorgesehen sein, wodurch zusätzlich eine hochgradige Stabilisierung dieses Messstrahls erzielt ist. Dies hat insbesondere Vorteile bei häufiger Änderung der Messumgebung bzw. bei Messungen in Fehladjustierungen des Messstrahls verursachendem Umfeld, beispielsweise in der Umgebung industrieller Fertigungsanlagen, so dass ein mühsames und zeitaufwändiges Nachadjustieren und Optimieren des Strahlenganges entfällt und nach einmaligem Ausrichten des Messstrahls eine einfache Anwendung der Spektroskopievorrichtung selbst für den auf dem Gebiet der Optik wenig erfahrenen Anwender möglich ist. Zu diesem Zweck ist ein endseitiges Verbindungsglied mit wenigstens einem Parabolspiegel zur Einspeisung und Ausrichtung eines Strahls aus einer Lichtquelle in die Messzelle ausgebildet. Vorzugsweise ist das andere endseitige Verbindungsglied mit einem Spiegel zur Reflexion des eingespeisten Lichtstrahls ausgebildet, so dass die Messzelle zweimal vom Messstrahl durchlaufen wird und ein möglichst hoher Durchstrahlungsweg bei möglichst kompaktem Anlagenbau bewirkt ist. Weiterhin ist vorgesehen, dass das endseitige Verbindungsglied mit dem Parabolspiegel zur Einspeisung eines Lichtstrahls mit einem weiteren Parabolspiegel zur Auskopplung des an der anderen endseitigen Verbindung reflektierten Lichtstrahls ausgebildet ist und dass der ausgekoppelte Lichtstrahl in einen Detektor und/oder Spektrometer eingespeist wird. Dabei kann der Lichtstrahl aus einem Lichtleiter, wie z.B. ein Glasfaserkabel, in die Messzelle eingekoppelt und/oder in einen Lichtleiter aus der Messzelle ausgekoppelt werden. Die Ein- bzw. Auskopplung aus den Lichtleitern wird hierbei durch die in einem endseitigen Verbindungsglied angeordneten Parabolspiegel bewirkt. Alternativ können hierzu auch optische Linsen Verwendung finden.

Insbesondere im Hinblick auf die Anwendung der erfindungsgemäßen Spektroskopievorrichtung zur Bestimmung des Benzolgehalts in chemisch verunreinigtem Kohlendioxid kann als Lichtquelle eine im UV-Bereich, insbesondere in einem Wellenlängenbereich zwischen 220 nm und 280 nm, strahlende Xenon-Lichtquelle und als Detektor/Spektrometer ein Silizium-Array vorgesehen sein. Alternativ kann als Lichtquelle eine im Infrarot-Bereich strahlende Lichtquelle und als Detektor/Spektrometer ein HgCdTe-Array vorgesehen sein. Die räumliche spektrale Zerlegung des empfangenen Signals erfolgt durch ein Prisma oder vorzugsweise ein Gitter. Es kann ein hoch auflösendes Detektor-Array mit einer Messauflösung von bis zu 1024 Pixeln verwendet werden. Insbesondere in einem solchen Fall ist die dazu benötigte Gitterkonstante des Spektrometers derart hoch, dass die auf ein Pixel auftreffende Intensität im Vergleich zum Eingangssignal erheblich reduziert ist. Zu diesem Zweck sieht eine Weiterbildung der erfindungsgemäßen Vorrichtung eine Rauschreduktion durch Lock-In-Technik vor, wobei der ausgekoppelte Lichtstrahl über einen Lock-In-Verstärker detektiert wird. Eine Auswertung des im allgemeinen durch Überlagerung mehrerer Spektren gemessen Spektrums kann durch spektrale Entfaltung in die Einzelspektren mittels des PLS-Algorithmus erfolgen, wobei eine Entflechtung einzelner Spektralpeaks bzw. Spektrenformen voneinander und/oder vom Hintergrundrauschen durchgeführt wird.

Im Allgemeinen können sowohl (durchstimmbare) Laserquellen als auch spontan emittierende Lichtquellen verwendet werden, wie Xenon-Gasentladungslampen oder Deuteriumlampen. Letztere zeichnen sich naturgemäß durch ein breites Emissionsspektrum, jedoch durch eine geringere Leistungsdichte aus, welche zur Untersuchung kleinster Stoffmengen mit geringem Absorptionskoeffizienten nicht ausreichend sein kann. Umgekehrt ist eine (durchstimmbare) Laserquelle mit einer hohen Leistungsdichte, jedoch mit einem beschränkten Wellenlängenbereich behaftet, dessen Anregungsenergie zur Analyse des Gases zur Verfügung steht. Alternativ können auch superlumineszente Lichtquellen Verwendung finden, die im Hinblick auf spektrale Bandbreite und Leistungsdichte einen Mittelweg zwischen breitbandigen konventionellen Strahlen und Laseremissionsquellen bilden. Bei Verwendung einer Laserquelle kann insbesondere vorgesehen sein, dass die Messzelle wenigstens abschnittsweise die Kavität eines Lasers bildet. Beispielsweise kann ein herkömmlicher Laser auf der der Messzelle zugewandten Seite einen äußerst niedrigen Reflexionskoeffizienten aufweisen, beispielsweise mit einer Anti-Reflexionsbeschichtung ausgebildet sein, so dass der die Laserkavität begrenzende Spiegel durch einen im endseitigen Verbindungsglied der Messzelle integrierten Spiegel gebildet ist. Durch eine derartige Anordnung kann eine wesentliche Steigerung der Messgenauigkeit erzielt werden, wenn der Laser im Bereich des Schwellenwerts betrieben wird, da er in diesem Bereich eine hohe Empfindlichkeit gegenüber durch Absorption induzierte Verluste aufweist.

Es versteht sich, dass die erfindungsgemäße Spektroskopievorrichtung nicht nur in der Absorptionsspektroskopie und bei der Spurenanalyse Verwendung finden kann. Die Vorteile der Erfindung kommen beispielsweise auch bei der Fluoreszenzspektroskopie zum Tragen.

Weitere Eigenschaften und Vorteile der Erfindung ergeben sich aus der nachfolgenden Beschreibung eines Ausführungsbeispiels anhand der beigefügten Zeichnung sowie aus den Patentansprüchen.

Es zeigt:

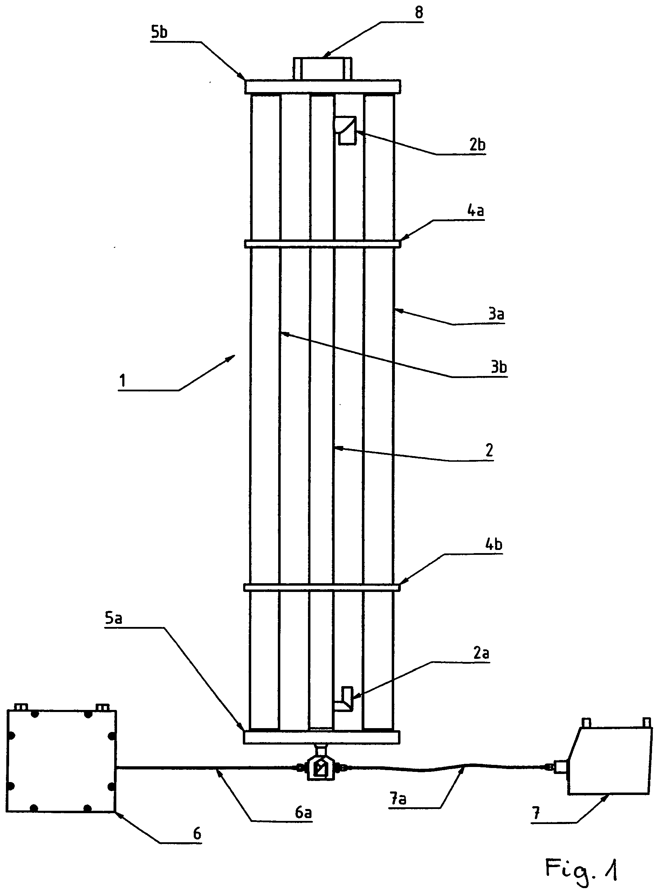

- Fig. 1: eine schematische Darstellung einer erfindungsgemäßen Spektroskopievorrichtung, insbesondere zur Spurenanalyse von verunreinigtem Kohlendioxid.

Das erfindungsgemäße Spektroskopiegerät 1 zur Spurenanalyse von verunreinigtem Kohlendioxid weist eine Messzelle 2 mit einem die Messoptik umgebenden an den Stirnseiten geschlossenen Rohr auf. Das Rohr hat zwei Gaseinlassstutzen 2a und 2b auf, über die die Messzelle 2 evakuiert bzw. mit einem Gas zur Spurenanalyse gefüllt werden kann, wie z.B. verunreinigtes Kohlendioxid. Zur mechanischen Stabilisierung der Messzelle 2 ist diese erfindungsgemäß mit den Rohren 3a und 3b mittels jeweils in Umfangsrichtung fixierten, den Rohrumfang vollständig umfassenden Verbindungselementen 4a und 4b starr verbunden.

Zur weiteren Stabilisierung der Messzelle 2 tragen erfindungsgemäß die jeweils endseitig an der Messzelle 2 und den Rohren 3a und 3b fixierten Verbindungselemente 5a und 5b bei. Diese weisen erfindungsgemäß adjustierbare und fest fixierbare Einrichtungen zum Ein- bzw. Auskoppeln eines Messstrahls in bzw. aus der Messzelle 2 auf, wodurch einerseits eine Stabilisierung dieses Messstrahls erfolgt, mit einer weiteren Erhöhung der Messgenauigkeit, zum anderen ein möglichst kompakter Aufbau der Messvorrichtung erzielt wird. In das an der Frontseite angeordnete Verbindungselement 5a ist ein erster Parabolspiegel integriert, zur Einspeisung und Ausrichtung des von der Lichtquelle 6 in den Lichtleiter 6a eingekoppelten Lichtstrahls. Das rückseitig angeordnete Verbindungselement 5b weist weiterhin einen Spiegel zur Reflexion des Messstrahls auf, der über Justierschrauben 8 so einstellbar ist, dass der Messstrahl erfindungsgemäß die Messzelle zweimal passiert, wodurch die effektive Absorptionsrate im Vergleich zu einmaligem Durchlaufen des Messstrahls verdoppelt wird und somit eine weitere Erhöhung der Messgenauigkeit bei gleichzeitig möglichst kompaktem Anlagenbau erzielt wird. Ein effektives Auskoppeln des Messstrahls in einen Lichtleiter 7a wird durch einen zweiten, in das Verbindungselement 5a integrierten Parabolspiegel bewirkt. Der rückseitige Spiegel ist über die Justierschrauben so einstellbar, dass der mittels des ersten Parabolspiegels eingespeiste Lichtstrahl durch den Spiegel am rückseitigen Verbindungselement 5b so auf den zweiten Parabolspiegel reflektiert wird und so in den Lichtleiter 7a erfolgt. Es folgt ein Messen und Auswerten des Absorptionsspektrums des ausgekoppelten Messstrahls in einem dafür vorgesehenen Detektor/Spektrometer 7.

Zum Ein- und Auskoppeln der Lichtstrahlen in und aus den Lichtleitern können weiterhin hier nicht dargestellte Expansions- bzw. Fokussierlinsen vorgesehen sein werden.

## Patentansprüche

1. Spektroskopievorrichtung mit einer rohrförmigen Messzelle (2), wobei die Spektroskopievorrichtung beidseitig der Messzelle (2) jeweils wenigstens ein parallel zur Erstreckungsrichtung der Messzelle (2) angeordnetes Rohr (3a, 3b) umfasst, wobei die beidseitig parallel zur Messzelle (2) angeordneten Rohre (3a, 3b) untereinander eine starre Verbindung aufweisen, und wobei die starre Verbindung mittels jeweils endseitig an der Messzelle (2) und an den Rohren (3a, 3b) angeordneten starren Verbindungsgliedern (5a, 5b) gebildet ist, wobei eines der Verbindungsglieder (5a) mit wenigstens einem Parabolspiegel zur Einspeisung und Ausrichtung eines Strahls aus einer Lichtquelle (6) in die Messzelle (2) ausgebildet ist.

2. Spektroskopievorrichtung nach Anspruch 1, **dadurch gekennzeichnet, dass** die parallel zur Messzelle (2) angeordneten Rohre (3a, 3b) aus dem gleichen Material wie die Messzelle (2) gebildet sind.

3. Spektroskopievorrichtung nach Anspruch 1 oder 2, **dadurch gekennzeichnet, dass** die parallel zur Messzelle (2) angeordneten Rohre (3a, 3b) aus Glas gebildet sind.

4. Spektroskopievorrichtung nach einem der Ansprüche 1 bis 3, **dadurch gekennzeichnet, dass** die starre Verbindung zusätzlich mittels jeweils eines oder mehrerer auf der Oberfläche der Rohre (3a, 3b) und der Oberfläche der Messzelle (2) angeordneten starren Verbindungsgliedern (4a, 4b) gebildet ist.

5. Spektroskopievorrichtung nach Anspruch 1, **dadurch gekennzeichnet, dass** das andere endseitige Verbindungsglied (5b) mit einem Spiegel zur Reflexion des eingespeisten Lichtstrahls ausgebildet ist.

6. Spektroskopievorrichtung nach Anspruch 1 oder 5, **dadurch gekennzeichnet, dass** das endseitige Verbindungsglied (5a) mit dem Parabolspiegel zur Einspeisung eines Lichtstrahls mit einem weiteren Parabolspiegel zur Auskopplung des an der anderen endseitigen Verbindung (5b) reflektierten Lichtstrahls ausgebildet ist.

7. Spektroskopievorrichtung nach Anspruch 6, **dadurch gekennzeichnet, dass** die Spektroskopievorrichtung einen Detektor und/oder Spektrometer (7) aufweist.

8. Spektroskopievorrichtung nach Anspruch 7, **dadurch gekennzeichnet, dass** die Spektroskopievorrichtung eine im UV-Bereich strahlende Lichtquelle aufweist und der Detektor/Spektrometer ein Silizium-Array ist.

9. Spektroskopievorrichtung nach Anspruch 7, **dadurch gekennzeichnet, dass** die Spektroskopievorrichtung eine im Infrarot-Bereich strahlende Lichtquelle aufweist und der Detektor/Spektrometer ein HgCdTe-Array ist.

10. Spektroskopievorrichtung nach einem der Ansprüche 1 bis 9, **dadurch gekennzeichnet, dass** die parallel zur Messzelle (2) angeordneten Rohre (3a, 3b) dieselbe Länge wie die Messzelle (2) aufweisen.

11. Spektroskopievorrichtung nach einem der Ansprüche 1 bis 10, **dadurch gekennzeichnet, dass** die parallel zur Messzelle (2) angeordneten Rohre (3a, 3b) denselben Durchmesser wie die Messzelle (2) aufweisen.

12. Spektroskopievorrichtung nach einem der Ansprüche 1 bis 11, **dadurch gekennzeichnet, dass** die Messzelle (2) eine Länge zwischen 50 und 150 cm, insbesondere im Bereich von 100 cm, aufweist.

13. Spektroskopievorrichtung nach einem der Ansprüche 1 bis 12, **dadurch gekennzeichnet, dass** die Messzelle (2) einen Durchmesser zwischen 1 und 5 cm, insbesondere im Bereich von 3 cm, aufweist.

14. Spektroskopievorrichtung nach einem der Ansprüche 7 bis 13, **dadurch gekennzeichnet, dass** der ausgekoppelte Lichtstrahl über einen Lock-In-Verstärker detektiert wird.

15. Spektroskopievorrichtung nach einem der Ansprüche 1 bis 14, **dadurch gekennzeichnet, dass** der Lichtstrahl aus einem Lichtleiter (6a) in die Messzelle eingekoppelt und/oder in einen Lichtleiter (7a) aus der Messzelle ausgekoppelt wird.

16. Spektroskopievorrichtung nach einem der Ansprüche 1 bis 15, **dadurch gekennzeichnet, dass** die Messzelle thermostatisiert ist.

17. Spektroskopievorrichtung nach einem der Ansprüche 1 bis 16, **dadurch gekennzeichnet, dass** eine oder mehrere Rohre (3a, 3b) als Messzellen ausgebildet sind.

18. Spektroskopievorrichtung nach einem der Ansprüche 1 bis 17, **dadurch gekennzeichnet, dass** die Messzelle (2) in Umfangsrichtung wenigstens eine weitere starre Verbindung mit jeweils einem parallel zur Erstreckungsrichtung der Messzelle angeordneten Rohr aufweist.

19. Spektroskopievorrichtung nach einem der Ansprüche 1 bis 18, **dadurch gekennzeichnet, dass** die Spektroskopievorrichtung als Lichtquelle (6) einen Laser aufweist.

20. Spektroskopievorrichtung nach einem der Ansprüche 1 bis 18, **dadurch gekennzeichnet, dass** die Spektroskopievorrichtung als Lichtquelle (6) eine spontane Emissionsquelle aufweist.

21. Verfahren zur Spektroskopie, wobei eine Spektroskopievorrichtung verwendet wird, die eine rohrförmige Messzelle (2) und beidseitig der Messzelle (2) wenigstens ein parallel zur Erstreckungsrichtung der Messzelle (2) angeordnetes Rohr (3a, 3b) umfasst, wobei die Messzelle (2) durch eine starre Verbindung mit den parallel zur Erstreckungsrichtung der Messzelle angeordneten Rohren (3a, 3b) stabilisiert wird, wobei die starre Verbindung mittels jeweils endseitig an der Messzelle (2) und den Rohren (3a, 3b) angeordneten starren Verbindungsgliedern (5a, 5b) gebildet ist, wobei eines der Verbindungsglieder (5a) mit wenigstens einem Parabolspiegel zur Einspeisung und Ausrichtung eines Strahls aus einer Lichtquelle (6) in die Messzelle (2) ausgebildet wird.

## Claims

1. Spectroscopy apparatus having a tubular measurement cell (2), wherein the spectroscopy apparatus comprises at each of the two sides of the measurement cell (2) at least one pipe (3a, 3b) which is arranged parallel with the extent direction of the measurement cell (2), wherein the pipes (3a, 3b) which are arranged at both sides parallel with the measurement cell (2) have a rigid connection to each other, and wherein the rigid connection is formed by means of rigid connection members (5a, 5b) which are arranged in each case at the end on the measurement cell (2) and on the pipes (3a, 3b), wherein one of the connection members (5a) is formed with at least one parabolic mirror for supplying and orientating a beam from a light source (6) into the measurement cell (2).

2. Spectroscopy apparatus according to claim 1, **characterised in that** the pipes (3a, 3b) which are arranged parallel with the measurement cell (2) are formed from the same material as the measurement cell (2).

3. Spectroscopy apparatus according to claim 1 or 2, **characterised in that** the pipes (3a, 3b) which are arranged parallel with the measurement cell (2) are formed from glass.

4. Spectroscopy apparatus according to any one of claims 1 to 3, **characterised in that** the rigid connection is additionally formed in each case by means of one or more rigid connection members (4a, 4b) arranged on the surface of the pipes (3a, 3b) and the surface of the measurement cell (2).

5. Spectroscopy apparatus according to claim 1, **characterised in that** the other end connection member (5b) is formed with a mirror for reflecting the light beam which is supplied.

6. Spectroscopy apparatus according to claim 1 or 5, **characterised in that** the end connection member (5a) having the parabolic mirror for supplying a light beam is formed with another parabolic mirror for decoupling the light beam which is reflected on the other end connection (5b).

7. Spectroscopy apparatus according to claim 6, **characterised in that** the spectroscopy apparatus has a detector and/or spectrometer (7).

8. Spectroscopy apparatus according to claim 7, **characterised in that** the spectroscopy apparatus has a light source which emits in the UV range and the detector/spectrometer is a silicon array.

9. Spectroscopy apparatus according to claim 7, **characterised in that** the spectroscopy apparatus has a light source which emits in the infrared range and the detector/spectrometer is an HgCdTe array.

10. Spectroscopy apparatus according to any one of claims 1 to 9, **characterised in that** the pipes (3a, 3b) which are arranged parallel with the measurement cell (2) have the same length as the measurement cell (2).

11. Spectroscopy apparatus according to any one of claims 1 to 10, **characterised in that** the pipes (3a, 3b) which are arranged parallel with the measurement cell (2) have the same diameter as the measurement cell (2).

12. Spectroscopy apparatus according to any one of claims 1 to 11, **characterised in that** the measurement cell (2) has a length between 50 and 150 cm, in particular in the region of 100 cm.

13. Spectroscopy apparatus according to any one of claims 1 to 12, **characterised in that** the measurement cell (2) has a diameter between 1 and 5 cm, in particular in the region of 3 cm.

14. Spectroscopy apparatus according to any one of claims 7 to 13, **characterised in that** the decoupled light beam is detected by means of a lock-in amplifier.

15. Spectroscopy apparatus according to any one of claims 1 to 14, **characterised in that** the light beam from a light guide (6a) is coupled into the measurement cell and/or decoupled in a light guide (7a) from the measurement cell.

16. Spectroscopy apparatus according to any one of claims 1 to 15, **characterised in that** the measurement cell is thermostatised.

17. Spectroscopy apparatus according to any one of claims 1 to 16, **characterised in that** one or more pipes (3a, 3b) are constructed as measurement cells.

18. Spectroscopy apparatus according to any one of claims 1 to 17, **characterised in that** the measurement cell (2) has in a peripheral direction at least one additional rigid connection having in each case a pipe which is arranged parallel with the extent direction of the measurement cell.

19. Spectroscopy apparatus according to any one of claims 1 to 18, **characterised in that** the spectroscopy apparatus has a laser as a light source (6).

20. Spectroscopy apparatus according to any one of claims 1 to 18, **characterised in that** the spectroscopy apparatus has a spontaneous emission source as a light source (6).

21. Method for spectroscopy, wherein there is used a spectroscopy apparatus which comprises a tubular measurement cell (2) and at both sides of the measurement cell (2) at least one pipe (3a, 3b) which is arranged parallel with the extent direction of the measurement cell (2), wherein the measurement cell (2) is stabilised by means of a rigid connection to the pipes (3a, 3b) which are arranged parallel with the extent direction of the measurement cell, wherein the rigid connection is formed by means of rigid connection members (5a, 5b) which are arranged in each case at the end side on the measurement cell (2) and the pipes (3a, 3b), wherein one of the connection members (5a) is constructed with at least one parabolic mirror for supplying and orientating a beam from a light source (6) into the measurement cell (2).

## Revendications

1. Dispositif de spectroscopie avec une cellule de mesure tubulaire (2), dans lequel le dispositif de spectroscopie comprend, sur chacun des deux côtés de la cellule de mesure (2), au moins un tube (3a, 3b) disposé parallèlement à la direction d'extension de la cellule de mesure (2), dans lequel les tubes (3a, 3b) disposés parallèlement des deux côtés de la cellule de mesure (2) présentent entre eux une liaison rigide et dans lequel la liaison rigide est formée au moyen d'éléments de liaison rigides (5a, 5b) disposés respectivement au niveau d'une extrémité de la cellule de mesure (2) et sur les tubes (3a, 3b), dans lequel un des éléments de liaison (5a) est réalisé avec au moins un miroir parabolique pour l'introduction et l'orientation d'un rayon provenant d'une source de lumière (6) dans la cellule de mesure (2).

2. Dispositif de spectroscopie selon la revendication 1, **caractérisé en ce que** les tubes (3a, 3b) disposés parallèlement à la cellule de mesure (2) sont constitués du même matériau de que la cellule de mesure (2).

3. Dispositif de spectroscopie selon la revendication 1 ou 2, **caractérisé en ce que** les tubes (3a, 3b) disposés parallèlement à la cellule de mesure (2) sont constitués de verre.

4. Dispositif de spectroscopie selon l'une des revendications 1 à 3, **caractérisé en ce que** la liaison rigide est formée, en outre, au moyen d'un ou plusieurs éléments de liaison rigides (4a, 4b) disposés sur la surface des tubes (3a, 3b) et la surface de la cellule de mesure (2).

5. Dispositif de spectroscopie selon la revendication 1, **caractérisé en ce que** l'autre élément de liaison côté extrémité (5b) est réalisé avec un miroir pour la réflexion d'un rayon lumineux introduit.

6. Dispositif de spectroscopie selon la revendication 1 ou 5, **caractérisé en ce que** l'élément de liaison côté extrémité (5a) avec le miroir parabolique pour l'introduction d'un rayon lumineux est réalisé avec un autre miroir parabolique pour la sortie du rayon lumineux réfléchi au niveau de l'autre élément de liaison côté extrémité (5b).

7. Dispositif de spectroscopie selon la revendication 6, **caractérisé en ce que** le dispositif de spectroscopie comprend un détecteur et/ou un spectromètre (7).

8. Dispositif de spectroscopie selon la revendication 7, **caractérisé en ce que** le dispositif de spectroscopie comprend une source de lumière émettant dans le domaine des UV et le détecteur/spectromètre est une matrice en silicium.

9. Dispositif de spectroscopie selon la revendication 7, **caractérisé en ce que** le dispositif de spectroscopie comprend une source de lumière émettant dans le domaine de l'infrarouge et le détecteur/spectromètre est une matrice HgCdTe.

10. Dispositif de spectroscopie selon l'une des revendications 1 à 9, **caractérisé en ce que** les tubes (3a, 3b) disposés parallèlement à la cellule de mesure (2) présentent la même longueur que la cellule de mesure (2).

11. Dispositif de spectroscopie selon l'une des revendications 1 à 10, **caractérisé en ce que** les tubes (3a, 3b) disposés parallèlement à la cellule de mesure (2) présentent le même diamètre que la cellule de mesure (2).

12. Dispositif de spectroscopie selon l'une des revendications 1 à 11, **caractérisé en ce que** la cellule de mesure présente une longueur entre 50 et 150 cm, plus particulièrement de l'ordre de 100 cm.

13. Dispositif de spectroscopie selon l'une des revendications 1 à 12, **caractérisé en ce que** la cellule de mesure présente un diamètre entre 1 et 5 cm, plus particulièrement de l'ordre de 3 cm.

14. Dispositif de spectroscopie selon l'une des revendications 7 à 13, **caractérisé en ce que** le rayon lumineux sortant est détecté par un amplificateur à verrouillage.

15. Dispositif de spectroscopie selon l'une des revendications 1 à 14, **caractérisé en ce que** le rayon lumineux est introduit à partir d'une fibre optique (6a) dans la cellule de mesure et/ou est sortie vers une fibre optique (7a) à partir de la cellule de mesure.

16. Dispositif de spectroscopie selon l'une des revendications 1 à 15, **caractérisé en ce que** la cellule de mesure est thermostatée.

17. Dispositif de spectroscopie selon l'une des revendications 1 à 16, **caractérisé en ce qu'**un ou plusieurs tubes (3a, 3b) sont conçus comme des cellules de mesure.

18. Dispositif de spectroscopie selon l'une des revendications 1 à 17, **caractérisé en ce que** la cellule de mesure (2) comprend, dans la direction de la circonférence, au moins une autre liaison rigide avec un tube disposé parallèlement à la direction d'extension de la cellule de mesure.

19. Dispositif de spectroscopie selon l'une des revendications 1 à 18, **caractérisé en ce que** le dispositif de spectroscopie comprend un laser en tant que source de lumière (6).

20. Dispositif de spectroscopie selon l'une des revendications 1 à 18, **caractérisé en ce que** le dispositif de spectroscopie comprend une source d'émission spontanée en tant que source de lumière (6).

21. Procédé de spectroscopie, dans lequel un dispositif de spectroscopie est utilisé, qui comprend une cellule de mesure tubulaire (2) et, sur chacun des deux côtés de la cellule de mesure (2), au moins un tube (3a, 3b) disposé parallèlement à la direction d'extension de la cellule de mesure (2), dans lequel la cellule de mesure (2) est stabilisée par une liaison rigide avec les tubes (3a, 3b) disposés parallèlement à la direction d'extension de la cellule de mesure, dans lequel la liaison rigide est formée au moyen d'éléments de liaison rigides (5a, 5b) disposés respectivement au niveau d'une extrémité de la cellule de mesure (2) et sur les tubes (3a, 3b), dans lequel un des éléments de liaison (5a) est réalisé avec au moins un miroir parabolique pour l'introduction et l'orientation d'un rayon provenant d'une source de lumière (6) dans la cellule de mesure (2).
